**Europäisches Patentamt**

**European Patent Office**

**Office européen des brevets**

(19)

(11) Publication number : **0 277 245 B1**

(12)

# EUROPEAN PATENT SPECIFICATION

(45) Date of publication of patent specification :
**29.01.92 Bulletin 92/05**

(51) Int. Cl.$^5$ : **C01G 49/00**

(21) Application number : **87904944.3**

(22) Date of filing : **27.07.87**

(86) International application number :
**PCT/JP87/00548**

(87) International publication number :
**WO 88/00925 11.02.88 Gazette 88/04**

(54) **PROCESS FOR PRODUCING COMPLEX OXIDE TO BE USED FOR PRODUCING FERRITE.**

(30) Priority : **26.07.86 JP 174713/86**

(43) Date of publication of application :
**10.08.88 Bulletin 88/32**

(45) Publication of the grant of the patent :
**29.01.92 Bulletin 92/05**

(84) Designated Contracting States :
**BE DE FR GB NL**

(56) References cited :
**US-A- 3 658 468**
**CHEMICAL ABSTRACTS, vol. 85, no. 8, 23rd**
**August 1976, page 652, abstract no. 55844p,**
**Columbus, Ohio, US; & JP-A-76 27 874**
**(MATSUSHITA ELECTRIC INDUSTRIAL CO.,**
**LTD) 09-03-1976**

(73) Proprietor : **Chemirite, Ltd.**
**Daiei-kakan 6F 7-12-14, Ginza**
**Chuo-ku Tokyo (JP)**
Proprietor : **NIPPON STEEL CORPORATION**
**6-3 Otemachi 2-chome Chiyoda-ku**
**Tokyo 100 (JP)**

(72) Inventor : **HIRAI, Naoe**
**Chemirite, Ltd. 12-14, Ginza 7-chome**
**Chuo-ku Tokyo 104 (JP)**
Inventor : **MURASE, Tohoru**
**Chemirite, Ltd. 12-14, Ginza 7-chome**
**Chuo-ku Tokyo 104 (JP)**
Inventor : **OHKUBO, Takehiko**
**Chemirite, Ltd. 12-14, Ginza 7-chome**
**Chuo-ku Tokyo 104 (JP)**

(74) Representative : **Kador & Partner**
**Corneliusstrasse 15**
**W-8000 München 5 (DE)**

**EP 0 277 245 B1**

Jouve, 18, rue Saint-Denis, 75001 PARIS

## Description

TECHNICAL FIELD

The present invention relates to a method for producing a powdered composite oxide which contains iron oxide and zinc oxide, and further, any one of manganese oxide, nickel oxide or magnesium oxide and which is used as the raw material of ferrite (hereinafter referred to as the "powdered composite oxide raw material").

BACKGROUND ART

The production of ferrite has been widely carried out by a method that the oxide-powder mixture, such as of iron oxide, zinc oxide, and manganese oxide, of iron oxide, zinc oxide, and nickel oxide, or of iron oxide, zinc oxide and magnesium oxide, is mechanically mixed, calcined, then further pulverized to provide the raw material powder, which is then molded and finish-roasted. This method, however, involves problems in that not only are the processes complicated, and a number of process steps and energy necessary, but also the homogenity of mixing of the respective components is unsatisfactory and the properties of the obtained ferrite are thus limited. As an improvement, Japanese Unexamined Patent Publication No. 55-144421 proposes a production method of ferrite wherein constituent chloride(s) of metal or metals of ferrite, the chloride(s) of which metal(s) has a low vapor pressure, is mixed with water to prepare a solution of mixed chlorides. This solution is oxidation-roasted by spray roasting or other methods to yield the mixed oxides. With these mixed oxides, an oxide of metal(s), the chloride of which metal(s) has a high vapor pressure, is subsequently mechanically mixed, and the molding and finish-roasting are then carried out. The ferrite is produced through these steps. This method is considerably advanced compared with the above-described method starting from the respective component powder oxides, but the improvement is still unsatisfactory because the step of mechanical mixing remains.

"FERRITES; Proceeding of the International Conference, September - October 1980, Japan, pages 64 - 67" discloses, with regard to the simultaneous decomposition and formation of oxides to be used as the raw material of ferrite, by thermal decomposition of a metal-chloride solution, that the decomposition temperatures of various chlorides are different, and therefore, it is not the goal to produce the oxide powder containing all of the components of ferrite by the thermal decomposition of chlorides. According to an example of the process illustrated, ZnO is subsequently mixed to produce the $MgO \cdot ZnO \cdot 2Fe_2O_3$ ferrite.

As the zinc oxide is frequently used as a component oxide of ferrite, the solution of mixed metal chlorides including zinc chloride to be thermally decomposed is charged into a conventional type of spray roasting furnace, in which most of the resultant oxides are discharged from the bottom of the furnace, but a considerable amount of zinc chloride is vaporized and discharged from the top of the furnace during the roasting so that the yield of zinc oxide in the oxides formed in the bottom of the furnace exhibits a low zinc oxide recovery and an unstable composition.

DISCLOSURE OF THE INVENTION

It is an object of the present invention to provide a method in which the mixed aqueous solution of chlorides of the ferrite-constituent metals including zinc is thermally decomposed in a fluidized roasting furnace in which oxides behave in a way different from that in the above-mentioned spray roasting furnace and powdered composite oxides raw material containing iron oxide and zinc oxide, and further any one of the manganese oxide, nickel oxide, and magnesium oxide, and having a desired composition, are discharged from an upper part of the fluidized roasting furnace, together with a decomposition product gas, and are collected with a dust collector. It is another object of the present invention to provide a one-step-process for producing a powdered composite oxide raw-material, with which ferrite can be produced without the calcining step of the ferrite production steps. The above mentioned objects are attained, in accordance with the present invention, by a method for producing the powdered composite oxide raw material, in which the essence resides in that (1) a mixed solution containing iron chloride and zinc chloride, and further, containing any one of manganese chloride, nickel chloride, and magnesium chloride, is sprayed into a fluidized roasting furnace having a fluidized bed with a temperature of 600°C or more to thermally decompose the same, and the resultant oxide powder is discharged, together with the decomposed product gas, from an upper part of the furnace and is collected by a dust collector. (2) Further, a preferred embodiment resides in a method for producing the powdered composite oxide raw material of (1), wherein the decomposition product gas and the fresh aqueous solution of mixed chlorides are brought into a gas-liquid contact in a heat recovery tower installed downstream of the dust collector along the flow direction of the decomposition product gas, thereby concentrating the fresh aqueous solution of mixed chlorides by the heat of the decomposition product gas, and the metal oxides and unreacted metal chlorides, which are contained in the decomposition product gas but have passed the dust collector, being not caught thereby, are transferred to the heat recovery tower, are dissolved in the fresh aqueous solution of mixed chlorides, and the obtained aqueous mixed solution is thermally decomposed in a fluidized roasting furnace.

(3) Furthermore, a preferred embodiment resides in a method for producing the powdered composite oxide raw material of (1) and (2), wherein the mixed solution or the fresh aqueous solution of mixed chlorides is prepared by adding the desired metals or metal oxides or metal chlorides to a waste liquor of steel pickling by hydrochloric acid, to adjust the composition.

## BRIEF DESCRIPTION OF THE DRAWINGS

Figure 1 illustrates an example of the process flow of the present invention;
Fig. 2 illustrates the temperature distribution of a fluidized bed;
Fig. 3 is an X-ray diffraction chart of the mixed powder oxides of the roasted product in an electric furnace; and,
Fig. 4 is an X-ray diffraction chart of the mixed powder oxides obtained in Example 2.

## BEST MODE OF CARRYING OUT THE INVENTION

The embodiments of the present invention illustrated in the drawings are hereinafter illustrated.

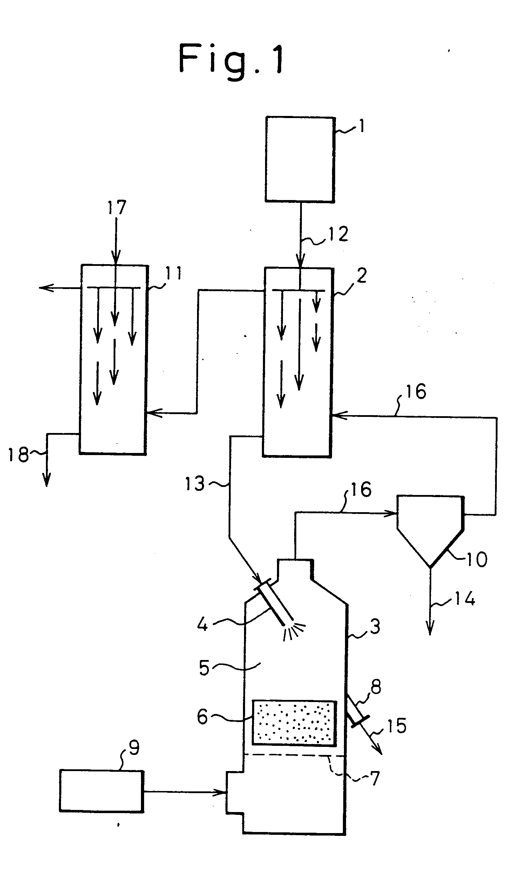

Figure 1 illustrates an example of the process flow of the present invention. 1 denotes the preparing tank of fresh aqueous solution of mixed chlorides. The term "fresh aqueous solution of mixed chlorides" herein indicates the mixed solution which contains iron chloride and zinc chloride, and further, contains any one of manganese chloride, nickel chloride, and magnesium chloride, and which is not yet in a gas-liquid contact with the decomposition product gas.

The fresh aqueous solution of mixed chlorides and this solution after contact with the decomposition product gas in the heat recovery tower are collectively referred to as the mixed aqueous solution.

The fresh aqueous solution of mixed chlorides can be obtained by dissolving the respective chlorides into water in a requisite proportion, and can be inexpensively provided by using, as the source material of iron chloride, the waste liquour of steel pickling by hydrochloric acid, which contains from 20 to 30% by weight of ferric chloride and some residual hydrochloric acid, and by dissolving therein a metallic element of the other metal(s) or oxide or chloride of other metal(s). The fresh aqueous solution of mixed chlorides 12 is usually transferred from the preparing tank of a fresh aqueous solution of mixed chlorides 1 to the heat recovery tower 2. On the other hand, the decomposition product gas 16 leaves an upper part of the fluidized roasting furnace 3, and the powder composite oxides are collected from the decomposition product gas in a dust collector 10. The decomposition product gas then enters the heat recovery tower 2 at a temperature of 350 to 450°C, where the decomposition product gas 16 and the fresh aqueous solution of mixed chlorides 12 are brought into a gas-liquid contact. At this time, the fresh aqueous solution of mixed chlorides 12 is concentrated by the heat of the decomposition product gas 16, and parts of oxides and unreacted chlorides, which cannot be completely collected in the dust collector 10, are recovered by dissolving into the fresh aqueous solution of mixed chloride. The mixed aqueous solution 13 is thus concentrated and dissolves therein metallic compounds which were contained in the decomposition product gas 16. The mixed aqueous solution 13 is then charged by spraying through the spray nozzle 4 into the upper space, namely free board 5, above a fluidized bed 6 of the fluidized roasting furnace 3.

The hot blast of, for example, 950°C, having a predetermined quantity of oxygen concentration is generated by combusting, for example, LPG, in the hot blast generating furnace 9 installed at the lower part of the fluidized roasting furnace 3. The hot blast is blown upwards through the gas distribution plate 7 in the fluidized roasting furnace 3 and results in the formation of the fluidized bed 6 consisting of oxide particles from 1 to 3 mm in diameter. The temperature of this fluidized bed 6 is adjusted to a temperature of not less than 600°C and a temperature sufficient for a formation of composite oxides by thermal decomposition, for example, 700°C. A part of droplets of the mixed aqueous solution, which is sprayed into the free board 5 through the spray nozzle 4, is rendered to fine particles of chloride as a result of a complete vaporization of water during passage through the free board 5, and such fine particles are readily thermally decomposed to yield the composite oxide which is then exhausted together with the upward flow of decomposition product gas through the upper part of the fluidized roasting furnace. On the other hand, the remainder of droplets of the mixed aqueous solution sprayed into the free board 5 arrives at the fluidized bed 6 without a complete vaporization of water. The vaporization of water is completed on the surface of oxide particles being fluidized and the remainder is simultaneously thermally oxidized to yield the composite oxide. Although a part of the composite oxide so formed leads to the formation and increase of the fluidized particles, most of the part forms the fine particles due to a vigorous collision of particles in the fluidized bed 6, is carried by the flow of decomposition product gas, and is exhausted out of upper part of the furnace. The composite oxide, which results in the increase of fluidized particles in the fluidized bed 6 during formation thereof, is consecutively discharged through the extracting outlet of fluidized particles 8 provided on the furnace wall in such a manner that the height of the fluidized bed is kept constant. The proportion of composite oxide discharged through the extracting outlet of fluidized particles 8 relative to the composite oxide discharged through the upper part of furnace is usually from 10 to 30%.

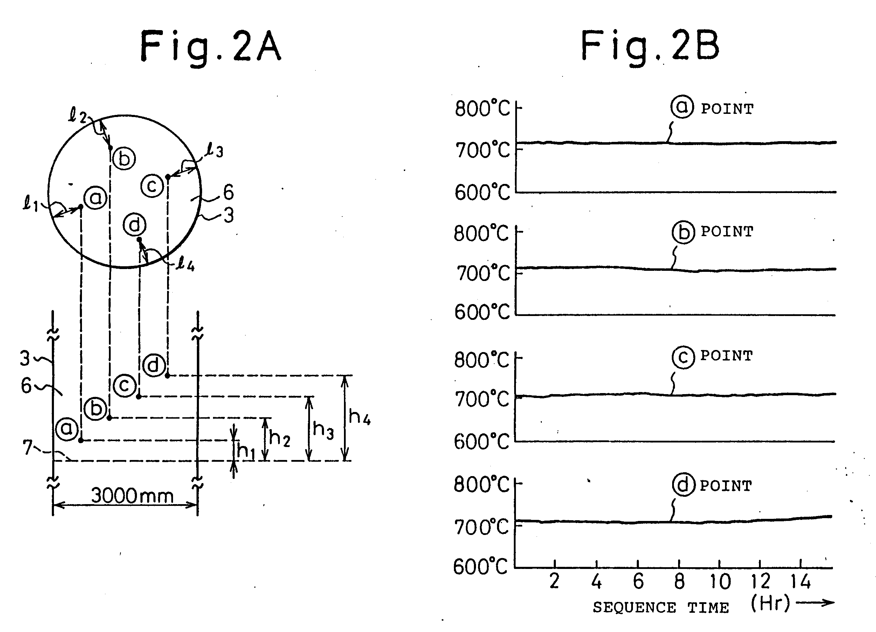

The temperature of the fluidized bed 6 has, due to a vigorous fluidizing movement, an extremely uniform temperature distribution. Figure 2 illustrates an example of the temperature distribution of the fluidized bed 6 during operation. (A) shows the temperature measuring points, and (B) shows the temperature sequence. Four thermocouples a, b, c, and d are positioned at distances $\ell_1$, $\ell_2$, $\ell_3$, and $\ell_4$ ($\ell_{1, 2, 3, 4}$ = 500 mm), respectively, from the furnace wall and at a height of $h_1$ = 200 mm, $h_2$ = 400 mm, $h_3$ = 600 mm, and $h_4$ = 800 mm, respectively, from the gas distribution plate 7. The temperature (Fig. 2 (B)) thus detected by four thermocouples arranged at planar positions and heights different from one another in the fluidized bed 6 is recognized as being extremely uniform and very stable for the time sequence. Such a uniformity and stability of the temperature of the fluidized bed 6 is very effective for controlling the thermal decomposition reactions to composite oxide and contributes to the stabilization of the composition and properties of the composite oxide. To control the temperature of the fluidized bed 6, for example, the quantity and temperature of hot blast fed from the hot blast generating furnace 9 are appropriately adjusted and the spraying conditions of a mixed aqueous solution are varied to adjust the proportion of droplets arriving at the fluidized bed. The powder of composite oxides, which is exhausted together with the decomposition product gas through the upper part of a fluidized roasting furnace, is separated from the gas and collected in the dust collector 10, and is discharged as the product. Parts of oxides and unreacted chlorides are not collected in the dust collector and pass into the subsequent heat recovery tower 2. Such oxides and unreacted chlorides are brought into contact with the fresh aqueous solution of mixed chlorides 12, to redissolve and recycle the same.

From the decomposition product gas, which has passed through the heat recovery tower 2, the hydrogen chloride formed by the reaction is recovered as the recovered hydrochloric acid 18 in the subsequent hydrochloric acid recoverying tower 11. The decomposition product gas is then passed, if necessary, through the removal tower for removing trace amounts of remaining detrimental impurities, and exhausted into an ambient air.

The reactions and products according to the inventive method are now described.

In the present invention, the temperature of the fluidized bed is kept at 600°C or more. The thermal decomposition reaction of chloride to yield oxide tends to reduce the reaction yield thereof with the decrease of temperature. At a temperature lower than 600°C, the unreacted product increases to an extent such that the $Cl^-$ components of collected product in the dust collector exceed a permissible level. In addition, such compounds as the zinc chloride passing through the dust collector in the gaseous state, which may be recycled from the heat-recovery tower to the fluidized roasting furnace, increases, and its proportion to the total flow becomes so high that the thermal efficiency of the total process is lowered. Furthermore, a low temperature of the fluidized bed comes from an increase of vaporization of the water in the fluidized bed, as described above, which results in an increase of the proportion of oxides constituting the fluidized particles, namely, a decrease of the yield of composite oxides discharged as the product from the upper part of the furnace.

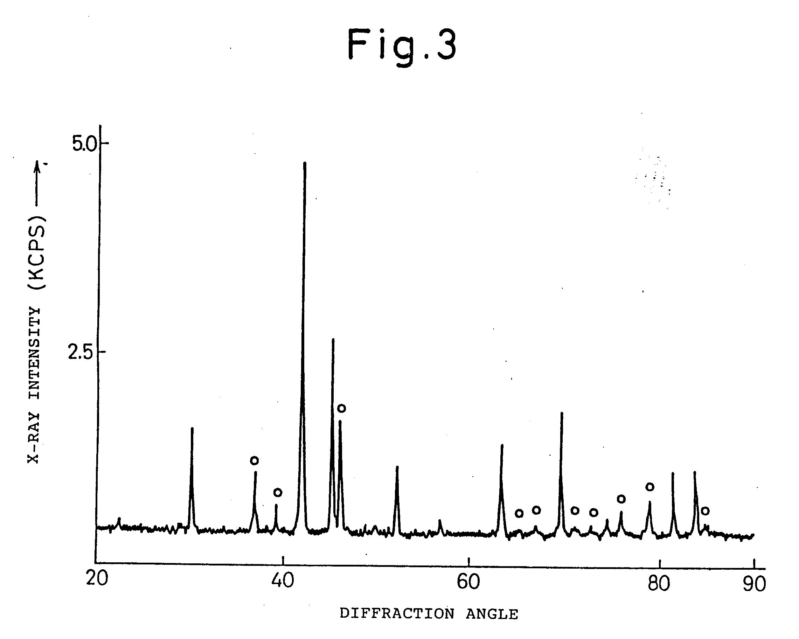

It is also necessary to keep the temperature of fluidized bed at 600°C or more, in the light of the qualities of composite oxides used as the raw material of ferrite. This is understood from Fig. 3 showing an example of the X-ray diffraction chart of the product, which is produced by an evaporation to dryness of a mixed solution of iron chloride, zinc chloride, and manganese chloride, followed by loading in a ceramic boat, and heating in an electric furnace at 500°C for 45 minutes. The abscissa and ordinate of the chart show the diffraction angle and X-ray intensity, respectively. When these peaks were collated with the data of JCPDS, it was confirmed that the peaks with an "o" symbol are due to the structure of the zinc-manganese complex oxide of $ZnMn_2O_4$. These peaks appear when a heating temperature is 450°C or more, but do not appear when a heating temperature is 400°C or less. That is, it is taught that the formation of zinc-manganese complex oxide, which is one of the initial conversion reactions to ferrite, takes place above about 450°C in the above mentioned thermal decomposition reaction of the solution of mixed chloride. As the temperature of the free board in a fluidized roasting furnace is usually lower than the temperature of the fluidized bed, by 150 to 200°C, due to the vaporization of droplets in the free board, and from the consideration of ensuring the minimum ferrite-conversion temperature of 450°C in the free board, the lower limit of the temperature of the fluidized bed is considered to be approximately 600°C. Since the thermal decomposition reaction takes place totally along the upwards flow, in the fluidized roasting furnace according to the present invention, the vaporization of zinc chloride appears to be the preceding stage of this thermal decomposition reaction and, therefore, the influence thereof upon the composition of composite oxide formed is only slight. Accordingly, the rise in temperature of the fluidized bed only contributes to the increase in the reaction rate of the thermal decomposition reaction. The temperature of the fluidized bed is, therefore, not believed to have an upper limit, in view of the reaction mechanism. However, when the temperature of the fluidized bed exceeds the boiling point of zinc chloride, the zinc chloride arriving at the fluidized bed tends to be violently vaporized, and the control of the composition of the composite oxide formed becomes rather difficult. From this point, the temperature range of the fluidized bed desirably does not exceed the boiling point of zinc chloride, from a consideration of the operation. In addition, when taking into consideration also that the yield of the composite oxide obtained saturates virtually at approximately 800°C, and further, the thermal efficiency of a total plant including the heat loss evidently decreases with the rise in temperature, the temperature of the fluidized bed is considered to be approximately 800°C at the maximum in the light of an economy of plant operation.

Example 1

Roasting tests of an aqueous solution of ternary chlorides, i.e., iron chloride, zinc chloride, and manganese chloride, were carried out by using the already installed, fluidized roasting plant for producing iron oxide. The results are shown in Table 1.

## Table 1

### Transferring Quantity of Materials
### per Hour in Example 1

| | Material | Temperature of fluidized bed | |
|---|---|---|---|
| | | 700°C | 600°C |
| Fresh aqueous solution of mixed chlorides | $FeCl_2$ | 1024 kg | 1024 kg |
| | $ZnCl_2$ | 109 kg | 109 kg |
| | $MnCl_2$ | 337 kg | 337 kg |
| Mixed solution charged into roasting furnace | $FeCl_2$ | 1045 kg | 1043 kg |
| | $ZnCl_2$ | 136 kg | 145 kg |
| | $MnCl_2$ | 344 kg | 346 kg |
| Components considered to be recycled in heat recovery-tower (whole amount calculated as chlorides) | $FeCl_2$ | 21 kg | 19 kg |
| | $ZnCl_2$ | 27 kg | 36 kg |
| | $MnCl_2$ | 7 kg | 9 kg |
| Collected products in dust collector (whole amount calculated as oxides) | $Fe_2O_3$ | 472 kg | 432 kg |
| | $ZnO$ | 56 kg | 49 kg |
| | $MnO$ | 132 kg | 119 kg |
| $Cl^-$ in collected products | $Cl^-$ | 0.73 kg | 1.26 kg |
| oxides discharged from fluidized bed as fluidized particles | $Fe_2O_3$ | 173 kg | 213 kg |
| | $ZnO$ | 9 kg | 16 kg |
| | $MnO$ | 58 kg | 71 kg |

## Example 2

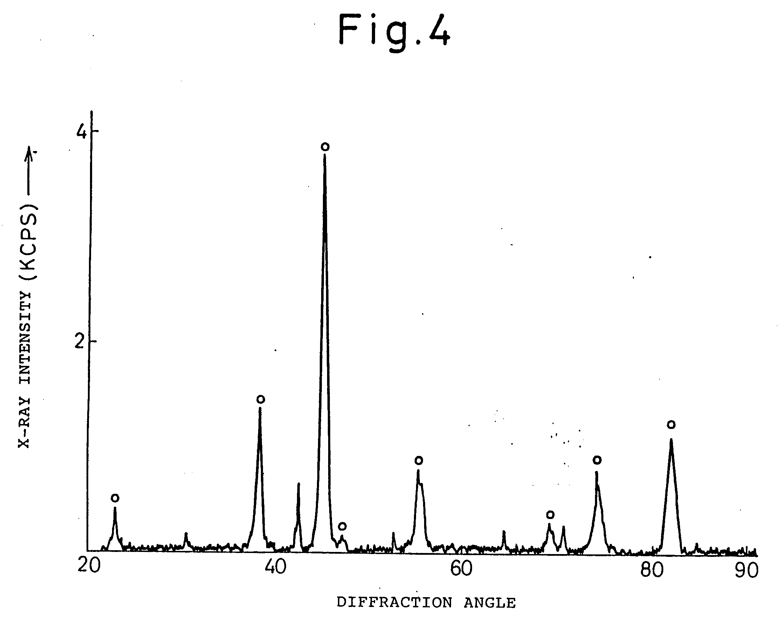

Roasting tests of 30% aqueous solution of ternary chlorides, i.e., iron chloride, zinc chloride and manganese chloride, were carried out, at fluidized bed temperatures of 760°C and 700°C, by using a pilot plant, which does not have the heat recovery tower such as that contained in an already installed, fluidized roasting plant for producing iron oxide. The results are shown in Table 2. Figure 4 is an example of an X-ray diffraction chart of the product when the temperature of the fluidized bed is 760°C. When the X-ray diffraction peaks were collated with the data of JCPDS, the peaks with "o" marks were confirmed to be those due to a spinel structure of complex oxide.

## Table 2

### Transferring Quantity of Materials per Hour in Example 2

| | Material | Temperature of fluidized bed | |
|---|---|---|---|
| | | 760°C | 700°C |
| Mixed solution charged into roasting furnace (30%) | $FeCl_2$ | 12.80 kg | 13.24 kg |
| | $ZnCl_2$ | 1.92 kg | 1.98 kg |
| | $MnCl_2$ | 4.28 kg | 4.42 kg |
| Collected products in dust collector (whole amount calculated as oxides) | $Fe_2O_3$ | 6.93 kg | 7.06 kg |
| | ZnO | 1.10 kg | 1.10 kg |
| | MnO | 1.94 kg | 1.93 kg |
| oxides discharged from fluidized bed as fluidized particles | $Fe_2O_3$ | 0.97 kg | 1.09 kg |
| | ZnO | 0.02 kg | 0.03 kg |
| | MnO | 0.29 kg | 0.35 kg |
| Forming yield (as metal element) | Fe | 98.0% | 97.7% |
| | Zn | 97.2% | 95.6% |
| | Mn | 92.4% | 91.6% |

Note, the forming yield is the value obtained when the total value of the amount collected in the dust-collector and the amount of oxide as the fluidized particles discharged from the fluidized bed is divided by the amount charged in the roasting furnace.

INDUSTRIAL APPLICABILITY

It is possible, in accordance with the present invention, to produce a powdered composite oxide of iron-zinc-manganese, iron-zinc-nickel, or iron-zinc-magnesium series, having the desired composition, by using the mixed aqueous solution which contains chlorides of iron and zinc, and any one of chlorides of manganese, nickel, and magnesium. This powdered composite oxide has an extremely uniform composition, and the majority of the components consists of a metal complex oxide having a spinel structure, as is apparent from the X-ray diffraction chart of Fig. 4. Accordingly, the powdered composite oxide is a raw material which enables the calcining step of ferrite-production steps to be omitted. Note, several powdered composite oxides, which are produced by the present invention and have compositions slightly different from one another, can be mixed to prepare the powdered composite oxide raw material, the composition of which is to be precisely adjusted to conform to a specification of ferrite. Such mixing for adjusting the composition does not impair the characteristics of the composite oxide raw material according to the present invention.

EP 0 277 245 B1

**Claims**

1. A method for producing powdered composite oxide for use as a raw material of ferrite, characterized in that a mixed solution containing iron chloride and zinc chloride, and further, containing any one of manganese chloride, nickel chloride and magnesium chloride is sprayed into a fluidized roasting furnace (3) having a fluidized bed (6) with a temperature of 600°C or more, to thermally decompose the same, and the resultant oxide powder is discharged, together with the decomposition product gas (16), from an upper part of the furnace and is collected by a dust collector (10).

2. A method according to claim 1, wherein the temperature of fluidized bed (6) is the boiling point of the zinc chloride or lower.

3. A method according to claim 1, wherein the temperature of fluidized bed (6) is 800°C or lower.

4. A method according to claim 1, characterized in that the decomposition product gas (16) and the fresh aqueous solution of mixed chlorides (1) are brought into a gas-liquid contact in a heat recovery tower (2) installed downstream of the dust collector (10) along the flow direction of the decomposition product gas (16), thereby the fresh aqueous solution of mixed chlorides (1) is concentrated with the heat of a decomposition product gas (16), and the metal oxides and unreacted metal chlorides, which are contained in the decomposition product gas (16) but are not caught in the dust collector (10) and are transferred to the heat-recovery tower (2), are dissolved in the fresh aqueous solution of mixed chlorides, and the obtained aqueous mixed solution is sprayed into the fluidized roasting furnace (3).

5. A method according to claim 4, wherein the temperature of fluidized bed (6) is the boiling point of the zinc chloride or lower.

6. A method according to claim 4, wherein the temperature of the fluidized bed (6) is 800°C or tower.

7. A method according to any one of claims 1 through 5, characterized in that the mixed aqueous solution or fresh aqueous solution of mixed chlorides is prepared by adding a desired metal, or metal oxide or metal chloride to the waste liquor of steel pickling by hydrochloric acid.

8. A method according to claim 7, wherein the temperature of the fluidized bed (6) is the boiling point of the zinc chloride or lower.

9. A method according to claim 7, wherein the temperature of the fluidized bed (6) is 800°C or lower.

**Patentansprüche**

1. Verfahren zur Herstellung eines pulverförmigen Verbundoxids zur Verwendung als Rohmaterial für Ferrit, dadurch gekennzeichnet, daß eine gemischte Lösung, die Eisenchlorid und Zinkchlorid enthält und weiterhin eine Verbindung aus Manganchlorid, Nickelchlorid und Magnesiumchlorid enthält, in einen Wirbelschicht-Röstofen (3) gesprüht wird, der ein Wirbelschichtbett (6) mit einer Temperatur von 600°C oder mehr aufweist, um diese Lösung thermisch zu zersetzen, und das resultierende Oxidpulver zusammen mit dem Zersetzungsproduktgas (16) vom oberen Teil des Ofens abgegeben und von einem Staubfänger (10) aufgefangen wird.

2. Verfahren nach Anspruch 1, worin die Temperatur des Wirbelschichtbettes (6) der Siedepunkt des Zinkchlorids ist oder darunter liegt.

3. Verfahren nach Anspruch 1, worin die Temperatur des Wirbelschichtbettes (6) 800°C oder weniger beträgt.

4. Verfahren nach Anspruch 1, dadurch gekennzeichnet, daß das Zersetzungsproduktgas (16) und die frische wässrige Lösung der gemischten Chloride (1) in einer Wärmerückgewinnungskolonne (2) in einen Gas/Flüssigkeits-Kontakt gebracht werden, der stromabwärts des Staubfängers (10) entlang der Strömungsrichtung des Zersetzungsproduktgases (16) installiert ist, wodurch die frische wässrige Lösung der gemischten Chloride (1) mit der Wärme des Zersetzungsproduktgases (16) konzentriert wird, und die Metalloxide und die nichtreagierten Metallchloride, die im Zersetzungsproduktgas (16) enthalten sind, jedoch nicht im Staubfänger (10), aufgefangen und zur Wärmerückgewinnungskolonne (2) übertragen werden, in der frischen wässrigen Lösung der gemischten Chloride aufgelöst werden, und die erhaltene wässrige gemischte Lösung in den Wirbelschicht-Röstofen (3) gesprüht wird.

5. Verfahren nach Anspruch 4, worin die Temperatur des Wirbelschichtbettes (6) der Siedepunkt des Zinkchlorids ist oder darunter liegt.

6. Verfahren nach Anspruch 4, worin die Temperatur des Wirbelschichtbettes (6) 800°C oder weniger beträgt.

7. Verfahren nach einem der Ansprüche 1 bis 5, dadurch gekennzeichnet, daß die gemischte wässrige Lösung oder die frische wässrige Lösung der gemischten Chloride hergestellt wird, indem das gewünschte Metall oder Metalloxid oder Metallchlorid der Abfallflüssigkeit des Stahlbeizens durch Chlorwasserstoffsäure

8

zugegeben wird.

8. Verfahren nach Anspruch 7, worin die Temperatur des Wirbelschichtbettes (6) der Siedepunkt des Zinkchlorids ist oder darunter liegt.

9. Verfahren nach Anspruch 7, worin die Temperatur des Wirbelschichtbettes (6) 800°C oder weniger beträgt.

**Revendications**

1. Procédé pour produire un oxyde mixte en poudre destiné à être utilisé comme matière première de ferrite, caractérisé en ce qu'on pulvérise une solution mélangée, qui contient du chlorure de fer et du chlorure de zinc, et qui contient en outre l'un quelconque des composés du groupe formé par chlorure de manganèse, chlorure de nickel et chlorure de magnésium, à l'intérieur d'un four de grillage (3) à lit fluidisé comportant un lit fluidisé (6) à une température au moins égale à 600°C, pour décomposer thermiquement cette solution, et on évacue la poudre d'oxydes obtenue avec les produits de décomposition gazeux (16) à la partie supérieure du four, et on la récupère au moyen d'un séparateur (10) de poussières.

2. Procédé conforme à la revendication 1, dans lequel la température du lit fluidisé (6) est égale ou inférieure au point d'ébullition du chlorure de zinc.

3. Procédé conforme à la revendication 1, dans lequel la température du lit fluidisé (6) est égale ou inférieure à 800°C.

4. Procédé conforme à la revendication 1, caractérisé en ce qu'on amène les produits de décomposition gazeux (16) en contact avec la solution aqueuse fraîche (1) de chlorures mélangés suivant un contact gaz-liquide dans une tour (2) de récupération de chaleur installée en aval du collecteur (10) de poussières dans la direction d'écoulement des produits de décomposition gazeux (16), on concentre ainsi la solution aqueuse fraîche (1) d'oxydes mélangés sous l'action de la chaleur des produits de décomposition gazeux (16), on dissout dans la solution aqueuse fraîche de chlorures mélangés les oxydes métalliques et les chlorures métalliques n'ayant pas réagi, qui sont contenus dans les produits de décomposition gazeux (16) mais ne sont pas retenus dans le collecteur (10) de poussières et sont emportés jusqu'à la tour (2) de récupération de chaleur, et on pulvérise la solution aqueuse mélangée obtenue dans le four de grillage (3) à lit fluidisé.

5. Procédé conforme à la revendication 4, dans lequel la température du lit fluidisé (6) est égale ou inférieure au point d'ébullition du chlorure de zinc.

6. Procédé conforme à la revendication 4, dans lequel la température du lit fluidisé (6) est égale ou inférieure à 800°C.

7. Procédé conforme à l'une quelconque des revendications 1 à 5, caractérisé en ce qu'on prépare la solution aqueuse mélangée ou solution aqueuse fraîche de chlorures mélangés en ajoutant un métal désiré, ou un oxyde métallique ou un chlorure métallique, à la liqueur usée provenant du décapage de l'acier par l'acide chlorhydrique.

8. Procédé conforme à la revendication 7, dans lequel la température du lit fluidisé (6) est égale ou inférieure au point d'ébullition du chlorure de zinc.

9. Procédé conforme à la revendication 7, dans lequel la température du lit fluidisé (6) est égale ou inférieure à 800°C.

# Fig.1

# Fig.2A

# Fig.2B

EP 0 277 245 B1

# Fig.3

EP 0 277 245 B1

# Fig.4